# EUROPEAN PATENT SPECIFICATION

(11) **EP 0 823 473 B1**
(45) Date of publication and mention of the grant of the patent: **08.03.2000**
(21) Application number: 97113337.6
(22) Date of filing: 01.08.1997
(51) Int. Cl.: C11C 3/10, A23D 9/00, A23L 1/40

(54) **Rapidly crystallizing fat having a low trans-fatty acid content**
Schnellkristallisierendes Fett mit einem niedrigen Trans-Fettsäuregehalt
Graisse cristallisant rapidement et à faible teneur en acide gras trans

(30) Priority: 08.08.1996 DE 19632088
(43) Date of publication of application: 11.02.1998
(73) Proprietor: CPC INTERNATIONAL INC., Englewood Cliffs New Jersey 07632-9976 (US); CPC Deutschland GmbH, 74074 Heilbronn (DE)
(72) Inventor: Kristott, Jens, Uwe, Dorking, Surrey RH4 1UU (GB); Rossell, John, Barry, Surrey RH4 3ED (GB)
(74) Representative: Lederer, Franz, Dr.

(56) References cited:
- GB-A- 990 034
- US-A- 5 196 215
- DATABASE WPI Section Ch, Week 7727 Derwent Publications Ltd., London, GB; Class D13, AN 77-47645Y XP002047060 -& JP 52 062 313 A (ASAHI DENKA KOGYO KK) , 23 May 1977
- V. FILIP ET AL.: "Physikalische und rheologische Eigenschaften von umgeesterten Fetten" FETT WISSENSCHAFT TECHNOLOGIE- FAT SCIENCE TECHNOLOGY., vol. 97, no. 3, 1995, LEINFELDEN ECHTERDINGEN DE, pages 319-323, XP002046147
- DATABASE WPI Section Ch, Week 9306 Derwent Publications Ltd., London, GB; Class D13, AN 93-049796 XP002047061 -& JP 05 001 297 A (FUJI OIL CO LTD) , 8 January 1993
- DATABASE WPI Section Ch, Week 8644 Derwent Publications Ltd., London, GB; Class B05, AN 86-287696 XP002047062 -& JP 61 209 544 A (SNOW BRAND MILK PROD CO LTD) , 17 September 1986
- DATABASE WPI Section Ch, Week 9215 Derwent Publications Ltd., London, GB; Class D13, AN 92-120578 XP002047063 -& JP 04 065 493 A (AJINOMOTO KK) , 2 March 1992

## Description

### FIELD OF THE INVENTION

The invention relates to a fat which is obtainable by subjecting the fat mixture of a vegetable fat and an animal fat to an interesterification. More specifically, the invention pertains to a fat which is obtainable by subjecting palm fat hard stearin and beef tallow or beef tallow fractions to interesterification.

### BACKGROUND OF THE INVENTION

The use of fats in combination with binders such as flours, starches, etc. is a proven principle in all the cuisines of the world for producing bound soups, sauces, etc. In the food industry, combining fats with binders is, furthermore, a customary and frequently used method of improving the dispersibility of binders, which have a tendency to form lumps because of their swelling properties, when they are added to liquids (in particular, hot liquids).

Whereas in the application of this principle in the kitchen, virtually any fat can be used, depending on product type, in industry, special requirements have to be made of the fat. One of these is a low susceptibility to oxidative decay (i.e., for example, rancidity on exposure to air).

To produce fat-binder combinations usable in dry form in dry soups, dry sauces, etc., in addition, a great number of further requirements must be fulfilled. These include a sufficiently high and simultaneously relatively sharp melting point and an adequate solid fat content. Only then is there a sufficient safeguard against oiling leading to lump formation of the mass. In the case of fats, the melting behavior is usually characterized by the drop point or by the solid fat content as a function of temperature (melting curve).

The drop point, measured below as slip point, should be about 42-44° C for fats of this type, in order to prevent oiling during transport, in the kitchen or where the product can otherwise be exposed to elevated temperatures before use and consumption.

On the other hand, however, the drop or melting point must not be too high, since it must also be ensured that no solid fat is present at the temperatures of consumption, because this would lead to an unpleasant tallowy mouthfeel. The sensory properties certainly are of particular importance, and many fats, such as bovine tallow, are not suitable for such applications because of an unpleasant mouthfeel.

In the industrial use of such fat-binder combinations, moreover, a rapid, uniform crystallization behavior which leads to a stable crystal modification is very important. This applies, in particular, to continuous processes, in which, for example, a solid fat present in a stable modification must be achieved in only a few minutes on cooling belts or cooling rollers. A process of this type is represented, for example, by the production, described in DE 32 43 963, of a flour roux, or applying coating compositions to products of the chocolate industry.

Polymorphism is the reason why palm fats, which are otherwise distinguished by high drop points, are not suitable for applications of this type. If it is desired to use fat-binder combinations of this type, together with other ingredients, in particular those of plant origin, such as spices, etc., lipolytic cleavage of the fat, as is frequently observed because of the enzymic activities generally present in such ingredients, must not lead to changes which are adverse to taste.

Against this background, fats suitable for the above mentioned applications are produced by the fat hardening method which has long been known (i.e., hydrogenation of the unsaturated fatty acids in the presence of suitable catalysts).

Apart from the fact that the melting behavior can be adjusted highly accurately in this manner, these fats are also distinguished by a rapid crystallization. The latter is due to a high content of trans-fatty acids. This can be up to 50% or more.

However, fats containing trans-fatty acids have been under discussion for some time from the nutritional aspect owing to their adverse action on cardiovascular disorders. Although they are apparently not to be evaluated as worse than saturated fatty acids in this respect, trans-fatty acids have a poorer image, because they do not occur in the starting fats and do not occur at such high concentrations in general.

In nature, trans-fatty acids actually occur only in the fats of ruminants, and thus in the corresponding foods such as butter, cheese, etc., and then only in exceptional cases at concentrations above 10%.

In contrast thereto, vegetable oils and fats, in the non-hydrogenated state, contain only extraordinarily low concentrations of trans-fatty acids which, in comparison with the concentrations present in animal fats, are generally insignificant for nutritional evaluation.

Fats having a drop point in the range from 35 to 45° C, a pleasant mouthfeel and a low content of trans-fatty acids are found, for example, in cocoa butter and in special fats for the confectionery industry, which have been developed as cocoa butter equivalent fats. Exceptions to these are the cocoa butter substitute fats which mostly contain hydrogenated vegetable fats and thus have high contents of trans-fatty acids. The disadvantages of cocoa butter and cocoa butter equivalent fats for the application described at the outset are their markedly polymorphic crystallization behavior and an excessively low crystallization rate. Polymorphic fats must be tempered in complex apparatuses before solidification in order to obtain a storage-stable product.

However, the additional introduction of a tempering step in the production of the above mentioned fat-binder combinations is undesirable for cost and technical reasons.

An object thus underlying the invention is to provide a fat which has a drop point in the range from 35 to 45° C.

Another object of the present invention is to provide a fat which has a pleasant mouthfeel.

Another object of the present invention is to provide a fat which has a low content of trans-fatty acids.

Another object of the present invention is to provide a fat which crystallizes as rapidly as is required for industrial use.

Another object of the present invention is to provide a fat melting curve which is as steep as possible.

Still another object of the present invention is to provide a fat having a trans-fatty acid content of, preferably, at most 10% by weight.

### SUMMARY OF THE INVENTION

The present invention relates to a process for producing a rapidly crystallizing fat with a low trans-fatty acid content and a rapidly crystallizing fat obtainable by the process. A mixture comprising a) palm fat hard stearin and b) an animal fat selected from the group consisting of beef tallow and beef tallow fractions is subjected to an interesterification. The palm fat hard stearin is solvent-fractionated palm fat hard stearin. The mixture comprises 10 to 90% animal fat and 90 to 10% stearin, based on the total weight of the fat. The ratio of animal fat to stearin is 75:25 to 40:60. The fats thus produced are outstandingly suitable, in combination which binders such as flours and starches, for use in the industrial production of dry soups and dry sauces.

### DETAILED DESCRIPTION OF THE INVENTION

The objects are achieved by a rapidly crystallizing fat having a low trans-fatty acid content, which is available by subjecting mixtures of an animal fat and a vegetable fat to an interesterification reaction. The fats melting in the desired temperature range may be produced in principle by mixing appropriately high-melting, if appropriate fractionated vegetable and animal fats, and completely hydrogenated vegetable oils. However, in the context of studies relating to this, it was found that, although all fat mixtures which had been prepared without additional modifications such as interesterification, initially exhibit a rapid crystallization to a greater or lesser extent, this virtually ceased after about 3 minutes. Furthermore, the solid fat contents achieved at this point in time were too low for virtually all of the fats and fat mixtures tested to ensure problem-free production of a fat-binder combination.

Whenever purely vegetable or purely animal fat mixtures were used, even interesterification did not give an improvement of the crystallization behavior, i.e., the retardation of the crystallization process again began after about 3 minutes of cooling time.

Surprisingly, it has now been found, however, that fat mixtures having a not insignificant amount of animal fat, e.g., beef tallow or beef tallow fractions, exhibit an advantageous change in the crystallization rate after the interesterification. A characteristic of these interesterified fat mixtures is an initially extraordinarily rapid crystallization which, although it considerably decreases after about two minutes of cooling time, it never comes to a virtually complete cessation of crystallization, as is the case in the fats and fat mixtures mentioned above. The interesterified fat mixtures containing corresponding portions of animal fats or their fractions still crystallize, even after 3 minutes of cooling time, with a crystallization rate of about 5% increase in solid fat per minute. This constant increase in the solid fat content within a few minutes is extremely important for a continuous production process of fat-binder combinations.

Surprisingly, it has further been found that the fat mixtures containing a portion of animal fat or fractions thereof also exhibit, after the interesterification, an advantageous change in their melting curve. The solid fat contents at room temperature of 20-25° C had increased, whereas at temperatures of 35-45° C, the solid fat contents were lower than before the interesterification, i.e., the melting curve became steeper owing to the interesterification. This means that interesterified fat mixtures of this type ensure safe storage and safe transport of the fat-binder combinations (no oiling, lump formation, etc.), but, on the other hand, that they are sufficiently liquid at consumption temperatures, and thus do not adversely affect the sensory quality of the food.

As already mentioned above, the advantageous crystallization and melting properties of the fat mixtures containing portions of animal fats or fractions thereof were obtained by an interesterification process which can be carried out in a manner known *per se*.

In a preferred process, the particular fat mixture is initially dried at reduced pressure at an elevated temperature of preferably 40-100° C, e.g., about 90° C, to a low water content of less than 1%, preferably less than 0.01%, in order to prevent inactivation of the interesterification catalyst. Then, at an elevated temperature of preferably 40-150° C, e.g., 90° C, under inert gas flushing, e.g., nitrogen flushing, and with intensive stirring, preferably without solvent, the mixture is interesterified by addition of a known interesterification catalyst (e.g., an alkoxide such as about 0.5% of sodium methoxide). The interesterification process is indicated by a rapidly developing intensive brown color and is generally completed after about 60 minutes.

The catalyst is then inactivated, for example, by adding 10% of hot water. The soaps formed during the interesterification of free fatty acids are removed by repeated washing out.

After drying again at reduced pressure at preferably 40-100° C, e.g., at 90° C, the interesterified fat mixture is bleached and deodorized in a conventional manner, in order to remove any metal ions possibly still present, originating from the catalyst, and free fatty acids and their derivatives formed during the interesterification.

The fat mixture which is to be subjected to the interesterification reaction preferably has 10 to 90% animal fat and 90 to 10% vegetable fat.

The percentages are based on the total content of fats in the mixture. Particularly preferable is a ratio of animal fat to vegetable fat of 75:25 to 40:60.

Animal fats used are preferably beef fat, such as beef tallow or beef tallow fractions. The vegetable fat preferably has an iodine number of less than 100 and is, in particular, a palm fat, solvent-fractionated palm fat hard stearin being particularly preferred.

The interesterified fat mixture thus produced is outstandingly suitable to be used in combination with binders such as flours, starches, etc., and improves the dispersibility of these binders. These fat-binder combinations are suitable, in particular for the industrial production for dry soups and dry sauces.

The examples describe the invention but are not meant to be limiting in any way. All percentages in the examples and the description are given in weight percent.

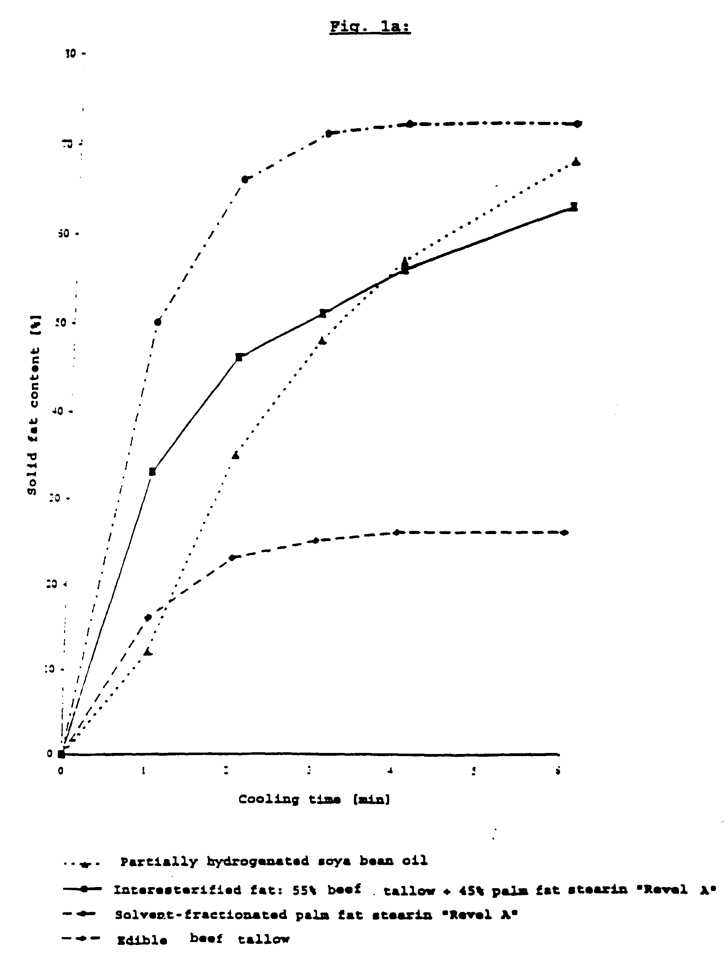

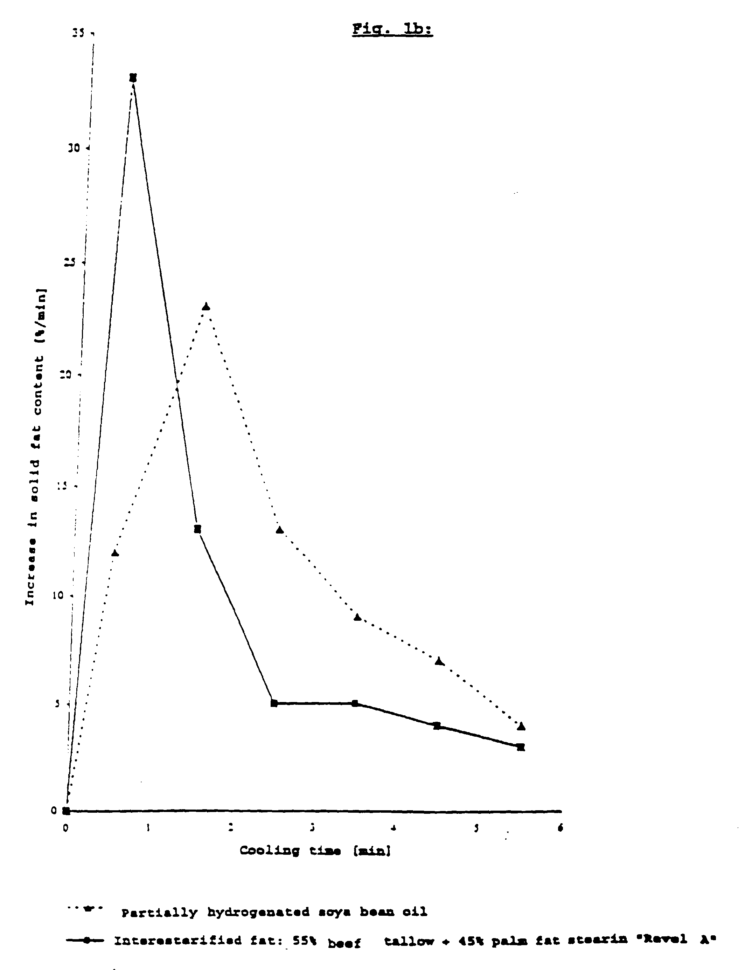

Examples 1-4 describe the interesterification of four different fat mixtures, and are not meant to be limiting in any way. The associated Figures 1a, b-3a, b show the improved crystallization behavior which is comparable with a partially hardened soya oil. The latter contains approximately 50% trans-fatty acids, predominantly in the form of the readily crystallizing elaidic acid.

### Example 1:

550 g of beef tallow and 450 g of palm fat hard stearin (trade name Revel A) were dried for 30 minutes at 90° C at reduced pressure to a water content of less than 0.01%. After addition of 0.5% of Na methoxide, the mixture was interesterified for one hour at 90° C with continuous nitrogen flushing and intensive stirring. The occurrence of interesterification was indicated by an intensive brown coloration. By adding 100 ml of hot water, the catalyst was inactivated and the mixture was further washed to pH = 6-7 with portions of hot water, each of 400 ml, for complete removal of the soaps formed in the reaction.

The fat thus obtained was dried as described above, after addition of 0.5% activated bleaching earth (Fulminate Premier) at 80° C and heated for a further 5 minutes to 95° C at reduced pressure and bleached for 20 minutes at this temperature.

After cooling to 60° C, the reduced pressure was abolished, and bleaching earth was filtered off and the mixture was deodorized at 200° C for 4 hours.

Table 1a shows the fatty acid composition of the initial fats and of the interesterified mixture. Table 1b shows the changes in the slip point and the melting curve (solid fat content as a function of temperature) achieved by the interesterification.

Figs. 1a and 1b show the crystallization behavior and the crystallization rate as a function of time in comparison with a partially hardened soya oil which represents the desired properties owing to a content of trans-fatty acids of about 50% (predominantly in the form of the readily crystallizing elaidic acid).

Table 1b, but in particular Figs. 1a and 1b, verify the advantageous change in crystallization behavior achieved by the interesterification.

**Table 1a**

| Fatty acid composition of the initial fats and the interesterification fat mixture | | | |
|---|---|---|---|
| | beef tallow | Palm fat Hard stearin (Revel A) | Interesterified mixture (55:45) |
| C 16:0 | 26.2 | 77.7 | 53.2 |
| C 18:0 | 23.4 | 6.4 | 15.3 |
| C 18:1 | 34.8 | 12.9 | 22.2 |
| Trans-fatty acids | 5.8 | 2.4 | 3.8 |

**Table 1b**

| Slip points and dependence of the solid fat content on temperature (melting curve) of the initial fats and the interesterified fat | | | |
|---|---|---|---|
| | beef tallow | Palm fat Hard stearin (Revel A) | Interesterified mixture (55:45) |
| Slip point [° C] Solid fat content [%] | 45 | 57 | 51 |
| 20° C | 51 | 96 | 82 |
| 25° C | 38 | 94 | 72 |
| 30° C | 26 | 85 | 61 |
| 35° C | 18 | 76 | 47 |
| 40° C | 10 | 65 | 34 |

### Example 2:

A mixture of 700 g of beef tallow and 300 g of palm fat hard stearin was interesterified as in Example 1.

Tables 2a and b summarize the fatty acid compositions of the initial fats and the interesterified fat (and the changes in the slip point and the melting curve achieved by the interesterification).

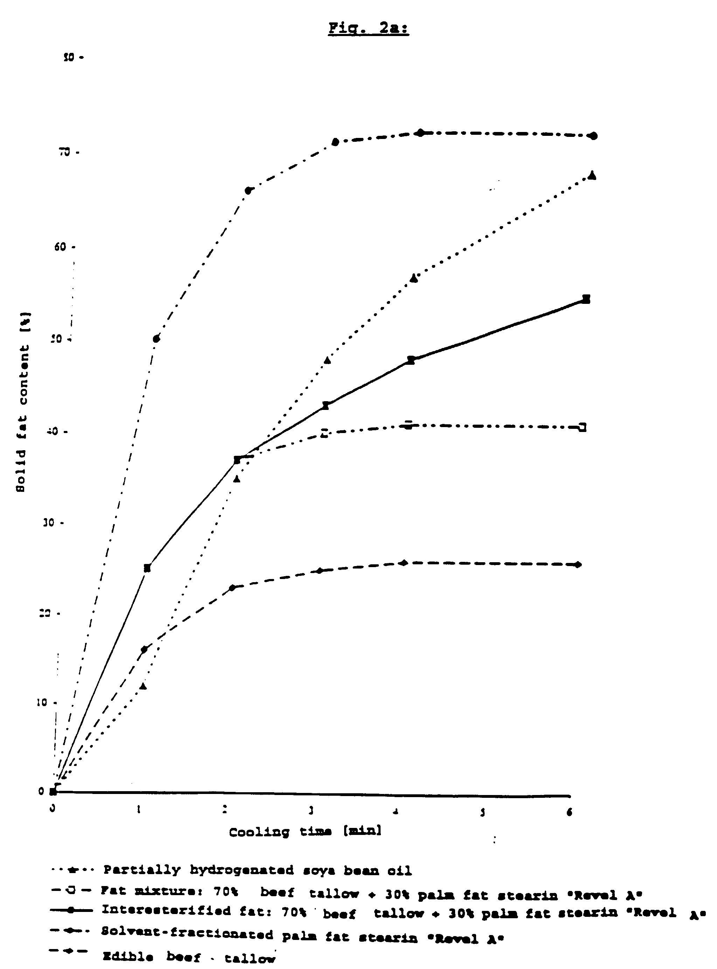

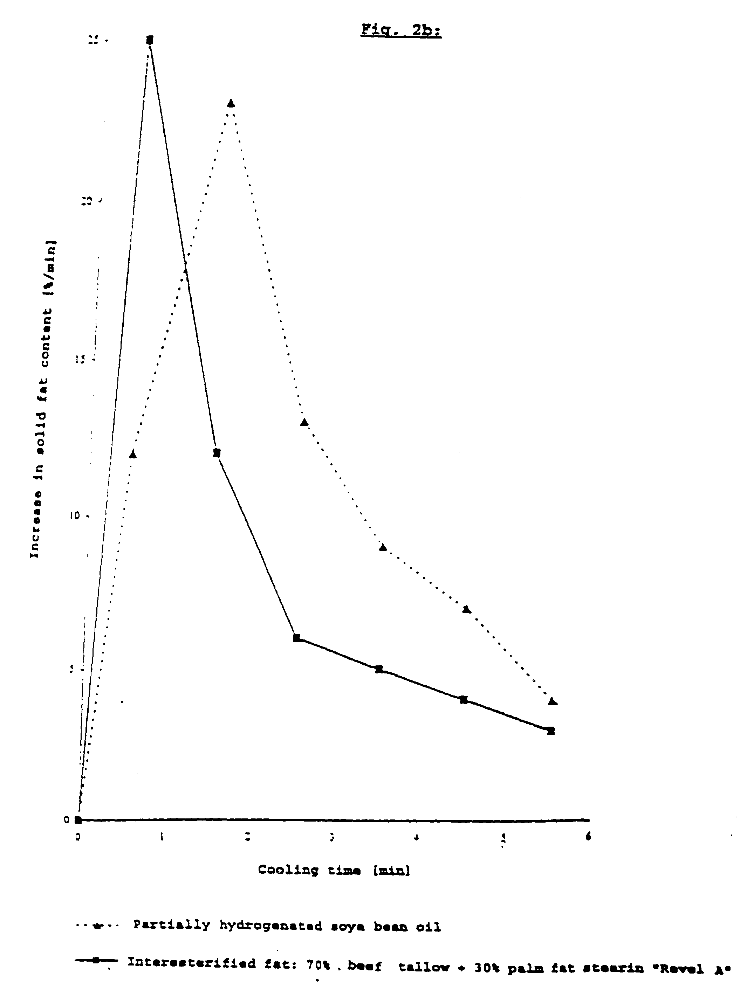

Figures 2a and b show that a crystallization behavior similar to the comparison fat (partially hardened soya fat) and a very high crystallization rate are achieved by the interesterification.

**Table 2a**

| Fatty acid composition of the initial fats and the interesterified fat mixture | | | |
|---|---|---|---|
| | beef tallow | Palm fat Hard stearin (Revel A) | Interesterified mixture (70:30) |
| C 16:0 | 26.2 | 77.7 | 42.6 |
| C 18:0 | 23.4 | 6.4 | 18.1 |
| C 18:1 | 34.8 | 12.9 | 26.9 |
| Trans-fatty acids | 5.8 | 2.4 | 4.3 |

**Table 2b**

| Slip point and dependence of the solid fat content on temperature (melting curve) of the initial fats and the interesterified fat | | | |
|---|---|---|---|
| | beef tallow | Palm fat Hard stearin (Revel A) | Interesterified mixture (70:30) |
| Slip point [° C] Solid fat content [%] | 45 | 57 | 47 |
| 20° C | 51 | 96 | 70 |
| 25° C | 38 | 94 | 59 |
| 30° C | 26 | 85 | 48 |
| 35° C | 18 | 76 | 36 |
| 40° C | 10 | 65 | 24 |

### Example 3:

A mixture of 700 g of beef fat stearin and 300 g of palm fat hard stearin was interesterified as in Example 1.

Tables 3a and b summarize the fatty acid compositions of the initial fats and the interesterified fat (and the changes in the slip point and the melting curve achieved by the interesterification).

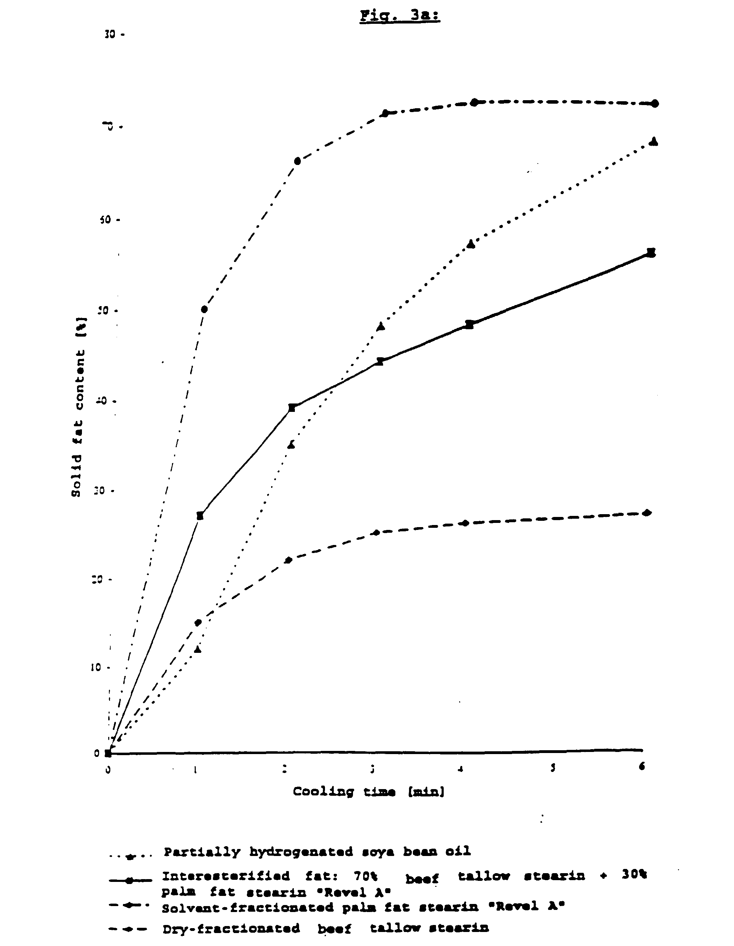

Figs. 3a and b show that a crystallization behavior similar to the comparison fat (partially hardened soya fat) and a very high crystallization rate are achieved by the interesterification even when beef fat stearin is used.

**Table 3a**

| Fatty acid composition of the initial fats and the interesterified fat mixture | | | |
|---|---|---|---|
| | beef fat stearin | Palm fat hard stearin (Revel A) | Interesterified mixture (70:30) |
| C 16:0 | 24.7 | 77.7 | 43.6 |
| C 18:0 | 24.4 | 6.4 | 19.1 |
| C 18:1 | 33.9 | 12.9 | 26.4 |
| Trans-fatty acids | 6.3 | 2.4 | 4.2 |

**Table 3b**

| Slip point and dependence of the solid fat content on temperature (melting curve) of the initial fats and the interesterified fat | | | |
|---|---|---|---|
| | beef fat stearin | Palm fat hard stearin (Revel A) | Interesterified mixture (70:30) |
| Slip point [°C] Solid fat content [%] | 48 | 57 | 50 |
| 20°C | 45 | 96 | 75 |
| 25°C | 34 | 94 | 64 |
| 30°C | 26 | 85 | 52 |
| 35°C | 18 | 76 | 38 |
| 40°C | 10 | 65 | 20 |

### Example 4:

A mixture of 450 g of beef tallow and 550 g palm fat hard stearin was interesterified as in Example 1.

Tables 4a and b summarize the fatty acid compositions of the initial fats and the interesterified fat (and the changes in the slip point and the melting curve achieved by the interesterification).

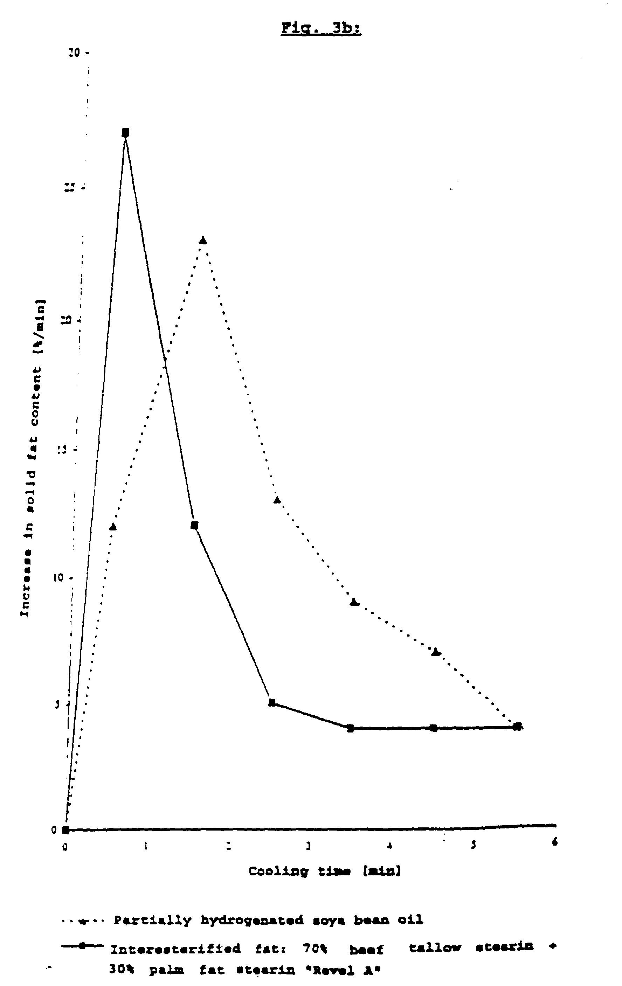

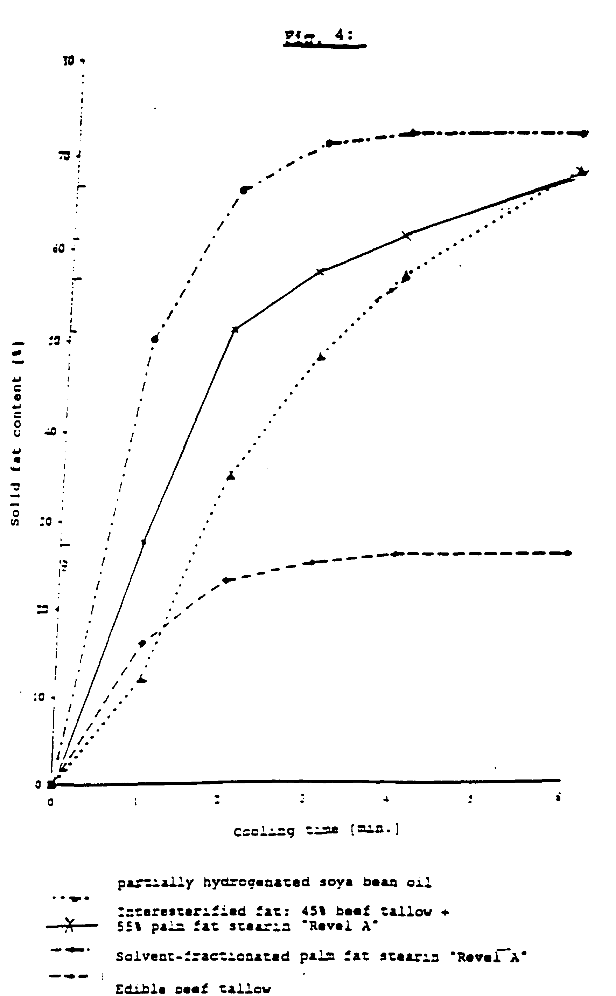

Fig. 4 shows that by using the higher percentage of 55% of palm fat hard stearin and even higher crystallization rate is achieved than by using the comparison fat - without raising the slip point. (Table 4b).

**Tab. 4a:**

| Fatty acid composition of the initial fats and the interesterification fat mixture | | | |
|---|---|---|---|
| | Beef tallow | Palm fat hard stearin (Revel A) | Interesterified mixture (45:55) |
| C 16:0 | 26.2 | 77.7 | 60.0 |
| C 18:0 | 23.4 | 6.4 | 13.6 |
| C 18:1 | 34.8 | 12.9 | 20.0 |
| Trans-fatty acids | 5.8 | 2.4 | 2.5 |

**Tab. 4b:**

| Slip points and dependence of the solid fat content on temperature (melting curve) of the initial fats and the interesterified fat | | | |
|---|---|---|---|
| | Beef tallow | Palm fat hard stearin (Revel A) | Interesterified mixture (45:55) |
| Slip point [°C] Solid fat content [%] | 45 | 57 | 49 |
| 20°C | 51 | 96 | 85 |
| 25°C | 38 | 94 | 77 |
| 30°C | 26 | 85 | . 66 |
| 35°C | 18 | 76 | 53 |
| 40°C | 10 | 65 | 40 |

## Claims

1. A process for producing a rapidly crystallizing fat with a low trans-fatty acid content comprising subjecting a mixture comprising a) palm fat hard stearin and b) an animal fat selected from the group consisting of beef tallow and beef tallow fractions to an interesterification.

2. The process according to claim 1, wherein said palm fat hard stearin is solvent-fractionated palm fat hard stearin.

3. The process according to claim 1, wherein said mixture comprises 10 to 90% said animal fat and 90 to 10% said stearin, based on the total weight of said fat.

4. The process according to claim 3, wherein the ratio of said animal fat to said stearin is 75:25 to 40:60.

5. A rapidly crystallizing fat having a low trans-fatty acid content obtainable by the process according to claim 1.

6. A process of preparing a fat-binder combination for producing bound soups and sauces comprising a step of using the rapidly crystallizing fat according to Claim 5 having a low trans-fatty acid content.

## Patentansprüche

1. Verfahren zur Herstellung eines schnellkristallisierenden Fettes mit niedrigem Trans-Fettsäuregehalt, umfassend, daß ein Gemisch umfassend a) Palmfett-Hartstearin und b) ein tierisches Fett ausgewählt aus der Gruppe bestehend aus Rindertalg und Rindertalgfraktionen einer Umesterung unterworfen wird.

2. Verfahren nach Anspruch 1, wobei das Palmfett-Hartstearin Lösungsmittel-fraktioniertes Palmfett-Hartstearin ist.

3. Verfahren nach Anspruch 1, wobei das Gemisch 10 bis 90% tierisches Fett und 90 bis 10% Stearin, bezogen auf das Gesamtgewicht des Fettes, umfaßt.

4. Verfahren nach Anspruch 3, wobei das Verhältnis von tierischem Fett zu Stearin 75:25 bis 40:60 ist.

5. Schnellkristallisierendes Fett mit niedrigem Trans-Fettsäuregehalt, erhältlich durch das Verfahren nach Anspruch 1.

6. Verfahren zur Herstellung einer Fett-Bindemittel Kombination zur Herstellung gebundener Suppen und Saucen, umfassend den Schritt der Verwendung des schnellkristallisierenden Fettes mit niedrigem Trans-Fettsäuregehalt nach Anspruch 5.

## Revendications

1. Procédé de production d'une graisse à cristallisation rapide ayant une faible teneur en acides gras de forme *trans,* comprenant l'étape consistant à soumettre un mélange constitué de a) la stéarine dure de graisse de palmiste et b) une graisse animale choisie dans l'ensemble constitué par le suif de boeuf et des fractions de suif de boeuf à une transestérification.

2. Procédé selon la revendication 1, dans lequel ladite stéarine dure de graisse de palmiste est de la stéarine dure de graisse de palmiste fractionnée dans un solvant.

3. Procédé selon la revendication 1, dans lequel ledit mélange comprend de 10 à 90 % de ladite graisse animale et de 90 à 10 % en poids de ladite stéarine par rapport au poids total de ladite graisse.

4. Procédé selon la revendication 3, dans lequel le rapport de ladite graisse animale à ladite stéarine est de 75:25 à 40:60.

5. Graisse à cristallisation rapide ayant une faible teneur en acides gras de forme *trans,* qu'on peut obtenir au moyen du procédé de l'exemple 1.

6. Procédé de préparation d'une combinaison de graisse et de liant pour produire des soupes et des sauces liées, comprenant une étape consistant à utiliser la graisse à cristallisation rapide selon la revendication 5, ayant une faible teneur en acides gras de forme *trans*.
